(19) Europäisches Patentamt
European Patent Office
Office européen des brevets

(11) **EP 3 438 046 A1**

(12) **EUROPEAN PATENT APPLICATION**
published in accordance with Art. 153(4) EPC

(43) Date of publication:
06.02.2019 Bulletin 2019/06

(51) Int Cl.:
*C01B 32/16* (2017.01)    *B01J 23/745* (2006.01)
*C01B 32/186* (2017.01)

(21) Application number: 17775116.1

(22) Date of filing: 28.03.2017

(86) International application number:
PCT/JP2017/012704

(87) International publication number:
WO 2017/170579 (05.10.2017 Gazette 2017/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 31.03.2016 JP 2016072824
31.03.2016 JP 2016072827

(71) Applicant: Zeon Corporation
Tokyo 100-8246 (JP)

(72) Inventor: SHIBUYA, Akiyoshi
Tokyo 100-8246 (JP)

(74) Representative: Maiwald Patent- und
Rechtsanwaltsgesellschaft mbH
Elisenhof
Elisenstraße 3
80335 München (DE)

(54) **METHOD FOR PRODUCING CARBON NANOSTRUCTURE AGGREGATE AND CARBON NANOSTRUCTURE AGGREGATE**

(57) A method for producing a carbon nanostructure aggregate having a large external specific surface area and a carbon nanostructure aggregate are provided. The method for producing a carbon nanostructure aggregate comprises supplying a source gas to a catalyst to grow a carbon nanostructure aggregate comprising a plurality of carbon nanostructures by a chemical vapor deposition method, wherein a gas derived from the source gas and brought into contact with the catalyst comprises: as a hydrocarbon to serve as a carbon source, at least one of: a hydrocarbon A having at least one acetylene skeleton, a hydrocarbon B having at least one 1,3-butadiene skeleton, a hydrocarbon C having at least one cyclopentadiene skeleton, and a hydrocarbon D having at least one allene skeleton, and carbon monoxide and carbon dioxide; and satisfies $0.01 \leq [CO]/[C] \leq 15$ where $[C]$ is a total volume concentration of carbon contained in the hydrocarbons A, B, C, and D, and $[CO]$ is a volume concentration of carbon monoxide.

*FIG. 5A*

*FIG. 5B*

**Description**

TECHNICAL FIELD

The disclosure relates to a method for producing a carbon nanostructure aggregate and a carbon nanostructure aggregate and, in particular, relates to a method for producing a carbon nanostructure aggregate having a large external specific surface area and a carbon nanostructure aggregate.

BACKGROUND

In recent years, carbon nanostructures such as carbon nanotubes (CNTs) and fullerenes have attracted attention as novel carbon materials. Among them, CNTs have relatively large specific surface areas and are therefore expected to have a wide range of applications as material and energy storage media, separation membranes, electrode materials, catalyst carriers, and the like. Accordingly, in order to obtain a CNT having a large specific surface area, a technique is known that involves creating holes in the end or side wall of a CNT by, for example, activation treatment such as oxidation to increase the specific surface area (e.g., see PTL 1).

However, the specific surface area increased by the method like PTL 1 is usually the internal specific surface area and not the external specific surface area. From the viewpoint of accessibility of substances and the like to CNTs, it is more preferable to increase the external specific surface area. Also, the treatment for creating holes in the end or side wall of CNTs by activation treatment such as oxidation is highly troublesome. Thus, the demand exists for a carbon nanostructure that has a larger external specific surface area as synthesized.

An arc discharge method, a laser abrasion method, a chemical vapor deposition (CVD) method, and the like are known as methods of producing CNTs. As one type of CVD method, a super growth method is proposed that is characterized by adding a catalyst activating material (a compound containing an oxygen atom, such as water and carbon dioxide) to a source gas (e.g., see PTL 2). In this method, the added catalyst activating material prevents catalyst deactivation, and thereby a significant productivity improvement and quality enhancement (increased length, high purity, large specific surface area) are achieved.

The use of carbon dioxide as a catalyst activating material in the super growth method is known to be advantageous as compared to water in that the uniformity of the grown CNT in the substrate plane is improved (e.g., see PTL 3) and strict control of the amount of the catalyst activating material to be added is unnecessary (e.g., see PTL 4).

CITATION LIST

Patent Literature

PTL 1: JP2011-207758A
PTL 2: WO2006/011655A
PTL 3: JP5622101B
PTL 4: WO2012/057229A

SUMMARY

(Technical Problem)

However, the use of carbon dioxide as a catalyst activating material in the super growth method is disadvantageous in that the external specific surface area of the synthesized CNT is slightly inferior. Accordingly, an object of the disclosure is to provide a method for producing a carbon nanostructure aggregate having a large external specific surface area, and a carbon nanostructure aggregate.

(Solution to Problem)

As a result of having conducted diligent research into ways to solve the above problem, the inventor found that a carbon nanostructure having a large external specific surface area can be produced by adding carbon monoxide and carbon dioxide as catalyst activating materials to a source gas and then adjusting the ratio [CO]/[C] of the volume concentration [CO] of carbon monoxide to the total volume concentration [C] of carbon of hydrocarbon contained in a gas that is actually brought into contact with a catalyst (hereinafter also simply referred to as a "contact gas") to an appropriate range.

Also, the inventor found that a carbon nanostructure aggregate having an external specific surface area exceeding 1300 $m^2$/g can be obtained by adjusting [CO]/[C] and the ratio [CO]/[$CO_2$] of the volume concentration [CO] of carbon monoxide to the volume concentration [$CO_2$] of carbon dioxide to appropriate ranges.

Moreover, the inventor also found that a carbon nanostructure aggregate exceeding 1315 $m^2$/g, which is the theoretical value of a single-walled CNT, can be obtained by adjusting [CO]/[C] and [CO]/[$CO_2$] to more appropriate ranges, thereby completed the disclosure.

That is, the aspects of the disclosure for solving the above problem are as follows.

The method for producing a carbon nanostructure aggregate of the disclosure is a method for producing a carbon nanostructure aggregate, comprising supplying a source gas to a catalyst to grow a carbon nanostructure aggregate comprising a plurality of carbon nanostructures by a chemical vapor deposition method, wherein

a gas derived from the source gas and brought into contact with the catalyst comprises:

as a hydrocarbon to serve as a carbon source, at least one of:

a hydrocarbon A having at least one acetylene skeleton,
a hydrocarbon B having at least one 1,3-butadiene skeleton,
a hydrocarbon C having at least one cyclopentadiene skeleton, and
a hydrocarbon D having at least one allene skeleton, and carbon monoxide and carbon dioxide; and

satisfies

$$0.01 \leq [CO]/[C] \leq 15$$

where [C] is a total volume concentration of carbon contained in the hydrocarbons A, B, C, and D, and [CO] is a volume concentration of carbon monoxide.

In the disclosure, the volume concentration of carbon monoxide is preferably 0.001% or more and less than 15%.

In the disclosure, the source gas preferably comprises at least one of acetylene, ethylene, 1,3-butadiene, and cyclopentene.

In the disclosure, the gas derived from the source gas and brought into contact with the catalyst preferably satisfies $0.01 \leq [CO]/[CO_2] \leq 30$ where [$CO_2$] is the volume concentration of carbon dioxide.

In the disclosure, the carbon nanostructures are preferably carbon nanotubes.

In the disclosure, the gas derived from the source gas and brought into contact with the catalyst preferably satisfies $1.0 \leq [CO]/[C] \leq 3.0$ and $1.0 \leq [CO]/[CO_2] \leq 2.3$ where [$CO_2$] is the volume concentration of carbon dioxide.

The carbon nanostructure aggregate according to the disclosure is a carbon nanostructure aggregate comprising a plurality of carbon nanostructures, wherein an external specific surface area exceeds 1300 $m^2$/g.

In the disclosure, graphene is preferably contained as the carbon nanostructures.

In the disclosure, graphene nanoribbons are preferably contained as the carbon nanostructures.

In the disclosure, carbon nanotubes are preferably contained as the carbon nanostructures.

In the disclosure, carbon purity by X-ray fluorometry is preferably 98% or more.

In the disclosure, a ratio of a G band peak intensity to a D band peak intensity (G/D ratio) in a Raman spectrum is preferably 2 or more.

(Advantageous Effect)

According to the disclosure, a method for producing a carbon nanostructure aggregate having a large external specific surface area and a carbon nanostructure aggregate can be provided.

BRIEF DESCRIPTION OF THE DRAWINGS

In the accompanying drawings:

FIG. 1 is a schematic diagram showing one example of a configuration of an apparatus for producing a carbon nanostructure aggregate applicable to the disclosure;
FIG. 2 is a schematic diagram showing another example of a configuration of an apparatus for producing a carbon nanostructure aggregate applicable to the disclosure;
FIG. 3 is a schematic diagram showing yet another example of a configuration of an apparatus for producing a carbon nanostructure aggregate applicable to the disclosure;

FIG. 4 is a graph showing one example of a t-plot of a carbon nanostructure aggregate;

FIG. 5A is a diagram showing one example of a TEM image of carbon nanotubes synthesized in Example 1-1;

FIG. 5B is a diagram showing one example of a TEM image of carbon nanotubes synthesized in Example 1-1;

FIG. 6A is one example of a TEM image of a carbon nanostructure aggregate synthesized in Example 3-1;

FIG. 6B is one example of a TEM image of a carbon nanostructure aggregate synthesized in Example 3-1;

FIG. 6C is one example of a TEM image of a carbon nanostructure aggregate synthesized in Example 3-1;

FIG. 7A is another example of a TEM image of a carbon nanostructure aggregate synthesized in Example 3-1; and

FIG. 7B is another example of a TEM image of a carbon nanostructure aggregate synthesized in Example 3-1.

## DETAILED DESCRIPTION

Hereinafter, embodiments of the disclosure will be described in detail. In the disclosure, a source gas is supplied to a substrate having a catalyst layer on the surface (hereinafter referred to as a "catalyst substrate"), and a carbon nanostructure aggregate is grown on the catalyst layer by a CVD method. A large number of carbon nanostructure aggregates are formed on the catalyst layer so as to be arranged (oriented) in a predetermined direction on the substrate.

<Substrate>

The substrate used in the catalyst substrate is a component that is, for example, in a flat plate form and is preferably capable of maintaining the shape even at a high temperature of 500°C or more. Specific examples include metals such as iron, nickel, chromium, molybdenum, tungsten, titanium, aluminum, manganese, cobalt, copper, silver, gold, platinum, niobium, tantalum, lead, zinc, gallium, indium, germanium, and antimony, and alloys and oxides containing these metals; or non-metals such as silicon, quartz, glass, mica, graphite, and diamond; and ceramics. Metal materials are of lower cost and are more easily processed than silicon and ceramics, and are thus preferable. In particular, an Fe-Cr (iron-chromium) alloy, an Fe-Ni (iron-nickel) alloy, an Fe-Cr-Ni (iron-chromium-nickel) alloy, and the like are suitable.

Examples of the form of the substrate include a flat plate, thin film, block, wire, mesh, or particle, fine particle, and powder. In particular, a shape that provides a large surface area relative to the volume is advantageous when producing the carbon nanostructure aggregate in large quantities. The thickness of the substrate in a flat plate form is not particularly limited, and, for example, substrates from thin films having about several $\mu$m to those having about several cm can be used. The thickness of the substrate in a flat plate form is preferably 0.05 mm or more and 3 mm or less.

<Catalyst>

In the catalyst substrate, a catalyst layer is formed on a substrate (on a carburizing prevention layer when the carburizing prevention layer is provided on the substrate). Any catalyst may be used as long as a carbon nanostructure aggregate can be produced, and examples include iron, nickel, cobalt, molybdenum, and chlorides and alloys thereof. A plurality of these may be complexed or layered, and such a complex or a laminate may be further complexed or layered with aluminum, alumina, titania, titanium nitride, or silicon oxide. Examples include an iron-molybdenum thin film, an alumina-iron thin film, an alumina-cobalt thin film, and an alumina-iron-molybdenum thin film, an aluminum-iron thin film, and an aluminum-iron-molybdenum thin film. The amount of the catalyst present is in a range such that the carbon nanostructure aggregate can be produced, and, for example, when iron is used, the thickness of the formed film is preferably 0.1 nm or more and 100 nm or less, more preferably 0.5 nm or more and 5 nm or less, and particularly preferably 0.8 nm or more and 2 nm or less.

Any of a wet process and a dry process (such as a sputtering evaporation method) may be applied to the formation of the catalyst layer on the substrate surface. From the viewpoint of simplicity of a film forming apparatus (not requiring a vacuum process), high throughput, low material cost, and the like, a wet process is preferably applied.

<Catalyst forming wet process>

The wet process for forming the catalyst layer includes the step of applying a coating agent obtained by dissolving in an organic solvent a metal organic compound and/or a metal salt containing an element that serves as a catalyst to a substrate. A stabilizer for suppressing an excessive condensation polymerization reaction of the metal organic compound and the metal salt may be added to the coating agent.

In the application step, any method such as a method involving application by spraying, brush coating, or the like; spin coating; and dip coating may be used. Dip coating is preferable from the viewpoint of productivity and film thickness control.

A heating step is preferably carried out after the application step. Heating initiates hydrolysis and a condensation polymerization reaction of the metal organic compound and the metal salt, and a cured film containing a metal hydroxide and/or a metal oxide is formed on the substrate surface. It is preferable to appropriately adjust the heating temperature in the range of about 50°C or more and 400°C or less and the heating time in the range of 5 minutes or more and 3 hours or less depending on the type of a catalyst thin film to be formed.

For example, when forming an alumina-iron thin film as a catalyst, an iron thin film is formed after an alumina film is formed.

Examples of the metal organic compound for forming an alumina thin film include aluminum alkoxides such as aluminum trimethoxide, aluminum triethoxide, aluminum tri-n-propoxide, aluminum tri-i-propoxide, aluminum tri-n-butoxide, aluminum tri-sec-butoxide, and aluminum tri-tert-butoxide. Other examples of aluminum-containing metal organic compounds include complexes such as aluminum(III) tris(acetylacetonato). Examples of the metal salt for forming an alumina thin film include aluminum sulfate, aluminum chloride, aluminum nitrate, aluminum bromide, aluminum iodide, aluminum lactate, basic aluminum chloride, and basic aluminum nitrate. Among these, aluminum alkoxide is preferably used. These can each be used singly or as a mixture of two or more.

Examples of the metal organic compound for forming an iron thin film include iron pentacarbonyl, ferrocene, iron(II) acetylacetonate, iron(III) acetylacetonate, iron(II) trifluoroacetylacetonate, and iron(III) trifluoroacetylacetonate. Examples of the metal salt for forming an iron thin film include inorganic acid irons such as iron sulfate, iron nitrate, iron phosphate, iron chloride, and iron bromide; organic acid irons such as iron acetate, iron oxalate, iron citrate, and iron lactate. Among these, an organic acid iron is preferably used. These can each be used singly or as a mixture of two or more.

The stabilizer is preferably at least one selected from the group consisting of β-diketones and alkanolamines. These compounds may be used singly, or two or more may be used as a mixture. β-Diketones include acetylacetone, methyl acetoacetate, ethyl acetoacetate, benzoylacetone, dibenzoylmethane, benzoyltrifluoroacetone, furoylacetone, and trifluoroacetylacetone, and, in particular, acetylacetone and ethyl acetoacetate are preferably used. Alkanolamines include monoethanolamine, diethanolamine, triethanolamine, N-methyl diethanolamine, N-ethyl diethanolamine, N,N-dimethylaminoethanol, diisopropanolamine, and triisopropanolamine, and are preferably secondary or tertiary alkanolamines.

As the organic solvent, various organic solvents can be used such as alcohol, glycol, ketone, ether, esters, and hydrocarbons, and alcohol or glycol is preferably used due to good solubility of the metal organic compound and the metal salt. These organic solvents may be used singly, or two or more may be used as a mixture. As the alcohol, methanol, ethanol, isopropanol, and the like are preferable in terms of handleability and preservation stability.

The content of the metal organic compound and/or the metal salt in the coating agent is usually 0.05 mass% or more and 0.5 mass% or less, and preferably 0.1 mass% or more and 0.5 mass% or less.

<Formation step>

In the production method of the disclosure, a formation step is preferably carried out before a growth step. The formation step is the step of configuring the ambient environment of the catalyst to be a reducing gas environment and, also, heating at least one of the catalyst and the reducing gas. This step provides at least one of the effects of reducing the catalyst, promoting the reduction of the catalyst particle size as a state suitable for the growth of carbon nanostructures, and improving catalyst activity. For example, when the catalyst is an alumina-iron thin film, the iron catalyst is reduced and forms fine particles, and a large number of iron fine particles having a nanometer size are formed on the alumina layer. Thereby, the catalyst becomes a suitable state for production of a carbon nanostructure aggregate. Although it is possible to produce a carbon nanostructure aggregate without this step, the amount of the carbon nanostructure aggregate produced and the quality can be dramatically improved by carrying out this step.

As the gas having reducing properties (a reducing gas), any gas capable of producing a carbon nanostructure aggregate may be used, and, for example, hydrogen gas, ammonia, and water vapor, and a mixed gas thereof are applicable. Also, a mixed gas obtained by mixing hydrogen gas with an inert gas such as helium gas, argon gas, and a nitrogen gas may be used. In addition to the formation step, the reducing gas may be appropriately used in a growth step.

<Growth step>

The growth step is the step of configuring the ambient environment of the catalyst to be a source gas environment and, also, heating at least one of the catalyst and the source gas to grow carbon nanostructures on the catalyst. From the viewpoint of growing high-quality carbon nanostructures, at least the catalyst is preferably heated. The heating temperature is preferably 400°C or more and 1100°C or less. The growth step is carried out by introducing an inert gas, carbon monoxide and carbon dioxide as catalyst activating materials, and a source gas optionally containing a reducing gas into a carbon nanostructure growth furnace accommodating the catalyst substrate.

[Contact gas]

A gas X that is brought into contact with the catalyst in the growth step is one great feature of the disclosure. The gas X contains various hydrocarbon gases resulting from decomposition of a source gas, the source gas reaching the catalyst without being decomposed, an inert gas, catalyst activating materials including carbon monoxide gas and carbon dioxide gas, and an optional reducing gas.

The gas X contains, as a hydrocarbon to serve as a carbon source, at least one of a hydrocarbon A having at least one acetylene skeleton, a hydrocarbon B having at least one 1,3-butadiene skeleton, a hydrocarbon C having at least one cyclopentadiene skeleton, and a hydrocarbon D having at least one allene skeleton; and carbon monoxide and carbon dioxide. Here, when [C] is the total volume concentration (%) of carbon contained in the hydrocarbons A, B, C, and D, and [CO] is the volume concentration (%) of carbon monoxide, the ratio [CO]/[C] of the volume concentration [CO] of carbon monoxide to the total volume concentration [C] of carbon satisfies:

$$0.01 \leq [CO]/[C] \leq 15 \qquad (i)$$

Thereby, a carbon nanostructure aggregate having a larger external specific surface area than when the gas X contains either carbon dioxide or carbon monoxide can be produced.

The ratio [CO]/[C] of the volume concentration [CO] of carbon monoxide to the total volume concentration [C] of carbon contained in the hydrocarbons A, B, C, and D preferably satisfies:

$$0.05 \leq [CO]/[C] \leq 5.5 \qquad (ii)$$

Thereby, a carbon nanostructure aggregate having an even larger external specific surface area can be produced. Also, [CO]/[C] more preferably satisfies:

$$0.05 \leq [CO]/[C] \leq 1.1 \qquad (iii)$$

Thereby, a carbon nanostructure aggregate having a large external specific surface area can be produced in a high yield.

In the disclosure, the volume concentration of carbon indicates the volume concentration of carbon atoms contained in the gas, and is calculated by the following formula where, with regard to the respective hydrocarbon gas species in the gas (i = 1, 2, and so on), the volume concentration (%) is D1, D2, and so on, and the number of carbon atoms contained in one molecule is C1, C2, and so on:

$$(\text{Carbon concentration}) = \Sigma DiCi$$

When the volume concentration (%) of carbon dioxide is $[CO_2]$, the ratio $[CO]/[CO_2]$ of the volume concentration of carbon monoxide [CO] to the volume concentration of carbon dioxide $[CO_2]$ preferably satisfies:

$$0.01 \leq [CO]/[CO_2] \leq 30 \qquad (iv)$$

Thereby, a carbon nanostructure aggregate having an external specific surface area exceeding 1000 $m^2$/g can be produced. Also, $[CO]/[CO_2]$ more preferably satisfies:

$$0.25 \leq [CO]/[CO_2] \leq 6.7 \qquad (v)$$

Thereby, a carbon nanostructure aggregate having an external specific surface area exceeding 1000 $m^2$/g can be produced in a high yield.

Moreover, it is preferable that the ratio [CO]/[C] of the volume concentration [CO] of carbon monoxide to the total volume concentration [C] of carbon satisfies:

$$1.0 \leq [CO]/[C] \leq 3.0 \qquad (vi)$$

and the ratio $[CO]/[CO_2]$ of the volume concentration of carbon monoxide $[CO]$ to the volume concentration of carbon dioxide $[CO_2]$ satisfies:

$$1.0 \leq [CO]/[CO_2] \leq 2.3 \qquad (vii)$$

Thereby, a carbon nanostructure aggregate having an external specific surface area greater than 1300 $m^2/g$ can be produced.

When the above formulae (vi) and (vii) are satisfied, the ratio $[CO]/[C]$ of the volume concentration $[CO]$ of carbon monoxide to the total volume concentration $[C]$ of carbon is preferably:

$$1.3 \leq [CO]/[C] \leq 2.8 \qquad (viii)$$

Thereby, a carbon nanostructure aggregate having an external specific surface area exceeding the theoretical value of a single-walled CNT (1315 $m^2/g$) can be produced.

When the above formulae (vi) and (vii) are satisfied, the ratio $[CO]/[CO_2]$ of the volume concentration $[CO]$ of carbon monoxide to the volume concentration $[CO_2]$ of carbon dioxide is preferably:

$$1.1 \leq [CO]/[CO_2] \leq 2.3 \qquad (ix)$$

Thereby, a carbon nanostructure aggregate having an external specific surface area exceeding the theoretical value of a single-walled CNT (1315 $m^2/g$) can be produced.

Herein, hydrocarbons having at least one acetylene skeleton may be referred to as "acetylenes", hydrocarbons having at least one 1,3-butadiene skeleton may be referred to as "1,3-butadienes", hydrocarbons having at least one cyclopentadiene skeleton may be referred to as "cyclopentadienes", and hydrocarbons having at least one allene skeleton may be referred to as "allenes".

Examples of the hydrocarbon A having at least one acetylene skeleton include at least one selected from the group consisting of acetylene, methylacetylene (propyne), vinylacetylene, 1-butyne (ethylacetylene), 2-butyne, diacetylene, isopropylacetylene, isopropenylacetylene, 1-pentyne, 2-pentyne, isopentyne, cyclopropenylacetylene, methylvinylacetylene, propenylacetylene, phenylacetylene, hexynes, and hexadiynes, and radicals thereof. Note that acetylene, methylacetylene, vinylacetylene, 2-butyne, and phenylacetylene are preferable from the viewpoint of structural stability at the growth temperature of the carbon nanostructures.

Examples of the hydrocarbon B having at least one 1,3-butadiene skeleton include at least one selected from the group consisting of 1,3-butadiene, isoprene, c-piperylene, and t-piperylene, and radicals thereof. Note that 1,3-butadiene is preferable from the viewpoint of production efficiency of the carbon nanostructure aggregate.

Examples of the hydrocarbon C having at least one cyclopentadiene skeleton include at least one selected from the group consisting of cyclopentadiene, methylcyclopentadiene, dimethylcyclopentadiene, trimethylcyclopentadiene, tetramethylcyclopentadiene, pentamethylcyclopentadiene, and ethylcyclopentadiene, indene, and radicals thereof. Note that cyclopentadiene and methylcyclopentadiene are preferable from the viewpoint of structural stability at the growth temperature of the carbon nanostructures.

Examples of the hydrocarbon D having at least one allene skeleton include at least one selected from the group consisting of propadiene (allene), 1,2-butadiene, and 2,3-pentadiene, and radicals thereof. Note that propadiene and 1,2-butadiene are preferable from the viewpoint of structural stability at the growth temperature of the carbon nanostructures.

In the disclosure, the total volume concentration $[A]$ of the hydrocarbon A in the gas X brought into contact with the catalyst is preferably 0.01% or more. $[A]$ is more preferably 0.05% or more and further preferably 0.1% or more. The upper limit concentration of $[A]$ tends to be proportional to the space density of the catalyst provided in a furnace, can be increased to 88%, and when a flat plate is used as the catalyst substrate, is usually preferably 10% or less, more preferably 5% or less, and further preferably 2% or less. An excessive concentration of the hydrocarbon A relative to the catalyst density results in a large amount of carbon impurities produced, such as amorphous carbon, and such impurities cannot be ignored depending on the application.

The total volume concentration $[B]$ of the hydrocarbon B in the gas X is preferably 0.01% or more. $[B]$ is more preferably 0.05% or more and further preferably 0.1% or more. The upper limit concentration of [B] tends to be proportional to the space density of the catalyst provided in a furnace, can be increased to 90%, and when a flat plate is used as the catalyst substrate, is usually preferably 10% or less, more preferably 5% or less, and further preferably 2% or less. An excessive concentration of the hydrocarbon B relative to the catalyst density results in a large amount of carbon impurities produced, such as amorphous carbon, and such impurities cannot be ignored depending on the application.

The total volume concentration [C] of the hydrocarbon C in the gas X is preferably 0.01% or more. [C] is more preferably 0.05% or more and further preferably 0.1% or more. The upper limit concentration of [C] tends to be proportional to the space density of the catalyst provided in a furnace, can be increased to 99%, and when a flat plate is used as the catalyst substrate, is usually preferably 10% or less, more preferably 5% or less, and further preferably 2% or less. An excessive concentration of the hydrocarbon C relative to the catalyst density results in a large amount of carbon impurities produced, such as amorphous carbon, and such impurities cannot be ignored depending on the application.

The total volume concentration [D] of the hydrocarbon D in the gas X is preferably 0.01% or more. [D] is more preferably 0.05% or more and further preferably 0.1% or more. The upper limit concentration of [D] tends to be proportional to the space density of the catalyst provided in a furnace, can be increased to 99%, and when a flat plate is used as the catalyst substrate, is usually preferably 10% or less, more preferably 5% or less, and further preferably 2% or less. An excessive concentration of the hydrocarbon D relative to the catalyst density results in a large amount of carbon impurities produced, such as amorphous carbon, and such impurities cannot be ignored depending on the application.

The volume concentration of carbon monoxide in the gas X is preferably 0.001% or more and less than 15%, and more preferably 0.1% or more and 10.0% or less.

The volume concentration of carbon dioxide in the gas X is preferably 0.1% or more and less than 30%, more preferably 0.2% or more and 20% or less, and further preferably 0.3% or more and 10% or less.

In the disclosure, identification of the contact gas and measurement of the volume concentration are carried out by suction-sampling a predetermined amount of gas in the vicinity of the position where the substrate is provided and analyzing the gas by gas chromatography (GC). In sampling, the gas is rapidly cooled in a short period of time to a temperature (about 200°C) at which pyrolysis does not proceed and then immediately introduced into GC. Thereby, it is possible to prevent a chemical change of the sample gas and accurately measure the composition of the gas in contact with the catalyst.

[Source gas]

In order to configure the gas X to be as described above, the source gas preferably contains at least one of a hydrocarbon A' having at least one acetylene skeleton, a hydrocarbon B' having at least one 1,3-butadiene skeleton, a hydrocarbon C' having at least one carbocycle having 5 carbon atoms, a hydrocarbon D' having at least one allene skeleton, and ethylene that produces by pyrolysis the hydrocarbons A to D in the carbon nanostructure growth temperature range.

The hydrocarbon A' is preferably at least one selected from the group consisting of acetylene, methylacetylene, vinylacetylene, 1-butyne, 2-butyne, isopropylacetylene, and isopropenylacetylene. In the source gas, the total volume concentration [A'] of the hydrocarbon A' is preferably 0.1% or more, more preferably 0.2% or more, and further preferably 0.3% or more. The upper limit concentration of [A'] tends to be proportional to the space density of the catalyst provided in a furnace, can be increased to 91%, and when a flat plate is used as the catalyst substrate, is usually preferably 10% or less, more preferably 5% or less, and further preferably 2% or less. There is a tendency that when the concentration of the hydrocarbon A' is excessively low, the effects of the disclosure are unlikely to be obtained, and when excessively high, carbon impurities such as amorphous carbon are produced, and such impurities cannot be ignored depending on the application.

The hydrocarbon B' is preferably at least one selected from the group consisting of 1,3-butadiene, isoprene, c-piperylene, and t-piperylene. In the source gas, the total volume concentration [B'] of the hydrocarbon B' is preferably 0.1% or more, more preferably 0.2% or more, and further preferably 0.3% or more. The upper limit concentration of [B'] tends to be proportional to the space density of the catalyst provided in a furnace, can be increased to 90%, and when a flat plate is used as the catalyst substrate, is usually preferably 10% or less, more preferably 5% or less, and further preferably 2% or less. There is a tendency that when the concentration of the hydrocarbon B' is excessively low, the effects of the disclosure are unlikely to be obtained, and when excessively high, carbon impurities such as amorphous carbon are produced, and such impurities cannot be ignored depending on the application.

The hydrocarbon C' is preferably at least one selected from the group consisting of cyclopentene, cyclopentane, cyclopentadiene, dicyclopentadiene, norbornene, norbornadiene, methylcyclopentadiene, dimethylcyclopentadiene, trimethylcyclopentadiene, tetramethylcyclopentadiene, pentamethylcyclopentadiene, and ethylcyclopentadiene, indene, and radicals thereof. Cyclopentene, dicyclopentadiene, norbornene, and norbornadiene are more preferable from the viewpoint of structural stability at the growth temperature of the carbon nanostructures. In the source gas, the total volume concentration [C'] of the hydrocarbon C' is preferably 0.1% or more, more preferably 0.2% or more, and further preferably 0.3% or more. The upper limit concentration of [C'] tends to be proportional to the space density of the catalyst provided in a furnace, can be increased to 99%, and when a flat plate is used as the catalyst substrate, is usually preferably 10% or less, more preferably 5% or less, and further preferably 2% or less. There is a tendency that when the concentration of the hydrocarbon C' is excessively low, the effects of the disclosure are unlikely to be obtained, and when excessively high, carbon impurities such as amorphous carbon are produced, and such impurities cannot be ignored depending on the application.

The hydrocarbon D' is preferably at least one selected from the group consisting of propadiene (allene), 1,2-butadiene, 2,3-pentadiene, and radicals thereof. Propadiene and 1,2-butadiene are more preferable from the viewpoint of structural stability at the growth temperature of the carbon nanostructures. In the source gas, the total volume concentration [D'] of the hydrocarbon D' is preferably 0.1% or more, more preferably 0.2% or more, and further preferably 0.3% or more. The upper limit concentration of [D'] tends to be proportional to the space density of the catalyst provided in a furnace, can be increased to 99%, and when a flat plate is used as a catalyst substrate, is usually preferably 10% or less, more preferably 5% or less, and further preferably 2% or less. There is a tendency that when the concentration of the hydrocarbon D' is excessively low, the effects of the disclosure are unlikely to be obtained, and when excessively high, carbon impurities such as amorphous carbon are produced, and such impurities cannot be ignored depending on the application.

In the source gas, the total volume concentration of ethylene is preferably 0.1% or more, more preferably 0.2% or more, and further preferably 0.3% or more. The upper limit concentration of ethylene tends to be proportional to the space density of the catalyst provided in a furnace, can be increased to 99%, and when a flat plate is used as the catalyst substrate, is usually preferably 20% or less, more preferably 10% or less, and further preferably 5% or less. There is a tendency that when the concentration of ethylene is excessively low, the effects of the disclosure are unlikely to be obtained, and when excessively high, carbon impurities such as amorphous carbon are produced, and such impurities cannot be ignored depending on the application.

In view of the suitable materials of the respective hydrocarbons A', B', C', and D' above, the source gas preferably contains at least one of acetylene, ethylene, 1,3-butadiene, and cyclopentene.

[Inert gas]

The source gas is usually diluted with an inert gas. The inert gas is a gas that is inert at a temperature at which the carbon nanostructures grow and that does not react with the growing carbon nanostructures, and is preferably a gas that does not deteriorate the activity of the catalyst. Examples include rare gases such as helium, argon, neon, and krypton, nitrogen, hydrogen, and mixed gases thereof. It is also possible to obtain an effect comparable to inert gas dilution without using an inert gas by reducing the pressure inside the entire furnace to reduce the partial pressures of various gas concentrations.

[Catalyst activating material]

As described above, in the disclosure, the gas X brought into contact with the catalyst in the growth step of the carbon nanostructures contains carbon monoxide and carbon dioxide as catalyst activating materials. Due to the catalyst activating materials, the production efficiency and the purity of the carbon nanostructures can be even more improved. From the viewpoint of growth condition controllability, it is most preferable to directly add carbon monoxide and carbon dioxide to the source gas, while carbon monoxide and carbon dioxide may be caused to be contained in the contact gas X by adding a different catalyst activating material to the source gas and then subjecting it to pyrolysis in a growth furnace. The different catalyst activating material is generally a substance containing oxygen, and is preferably a substance that undergoes pyrolysis to form carbon monoxide and/or carbon dioxide at the growth temperature. For example, oxygen, ozone, and oxygen-containing compounds in which the number of carbon atoms is small, such as acidic gas; alcohols such as ethanol and methanol; ethers such as tetrahydrofuran; ketones such as acetone; aldehydes; esters; and mixtures thereof can be added.

It is known that the partial pressures of components involved in a reaction (volume fractions $\times$ total pressure) generally affects the reaction rate in a CVD method. On the other hand, the total pressure does not directly affect the reaction rate, and can be changed over a broad range. Thus, it is accurate to use the partial pressure as a unit for defining a gas component concentration in CVD conditions, while in the disclosure the gas component concentrations of the source gas and the contact gas are described as volume fractions on the premise that the total pressure inside a growth furnace is 1 atm. Thus, when applying the disclosure to a case where the total pressure inside a growth furnace is not 1 atm, the volume fractions corrected so as to be able to indicate, in that environment, partial pressures corresponding to the partial pressures that are based on the above premise must be used as the gas component concentrations of the source gas and the contact gas. Such a correction in the case where the total pressure inside a growth furnace is not 1 atm is obvious to those skilled in the art, and thus such a case is also encompassed within the scope of the disclosure.

Other conditions

The pressure inside a reaction furnace and the treatment time in the growth step may be appropriately set in consideration of other conditions, and, for example, the pressure can be $10^2$ Pa or more and $10^7$ Pa or less, and the treatment time can be about 0.1 minutes or more and 120 minutes or less. The flow rate of the source gas introduced into a furnace can be appropriately set in reference to, for example, the Examples described below.

<Cooling step>

The cooling step is the step of cooling the carbon nanostructure aggregate, the catalyst, and the substrate in a cooling gas after the growth step. The carbon nanostructure aggregate, the catalyst, and the substrate after the growth step are in a high temperature state, and thus possibly oxidized when placed in an environment where oxygen is present. To prevent it, the carbon nanostructure aggregate, the catalyst, and the substrate are cooled to, for example, 400°C or less and more preferably 200°C or less in a cooling gas environment. As the cooling gas, an inert gas is preferable, and, in particular, nitrogen is preferable in terms of safety, cost, and the like.

<Production apparatus>

The production apparatus used in the method for producing a carbon nanostructure aggregate described above is not particularly limited as long as it includes a growth furnace (a reaction chamber) for receiving the catalyst substrate and can grow carbon nanostructures by a CVD method, and apparatuses such as a thermal CVD furnace and an MOCVD reaction furnace can be used. From the viewpoint of enhancing the production efficiency of the carbon nanostructure aggregate, it is preferable to supply the reducing gas and the source gas to the catalyst on the catalyst substrate by gas shower. Below, an example of an apparatus equipped with a shower head capable of spraying a gas stream substantially perpendicular to the catalyst substrate is described as well.

[One example of batch-type production apparatus]

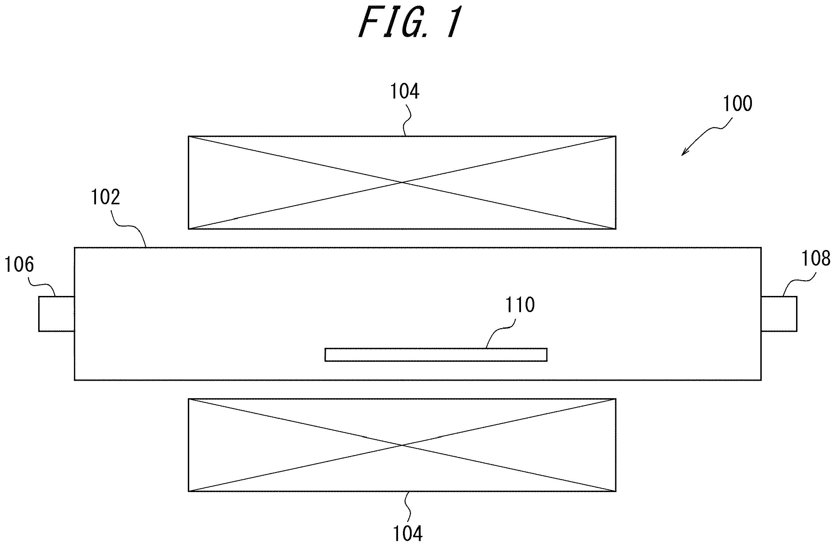

FIG. 1 schematically shows a production apparatus 100 used in the method for producing a carbon nanostructure aggregate described above. This apparatus 100 includes a reaction furnace 102 made of quartz for receiving a substrate that supports a catalyst, a heater 104 provided to surround the reaction furnace 102 and composed of, for example, a resistance heating coil, a gas supply port 106 connected to one end of the reaction furnace 102 to supply the reducing gas and the source gas, a discharge port 108 connected to the other end of the reaction furnace 102, and a holder 110 made of quartz for securing the substrate. Although not shown, a control device including a flow rate control valve, a pressure control valve, and the like is further provided in a suitable place to control the flow rates of the reducing gas and the source gas.

[Another example of batch-type production apparatus]

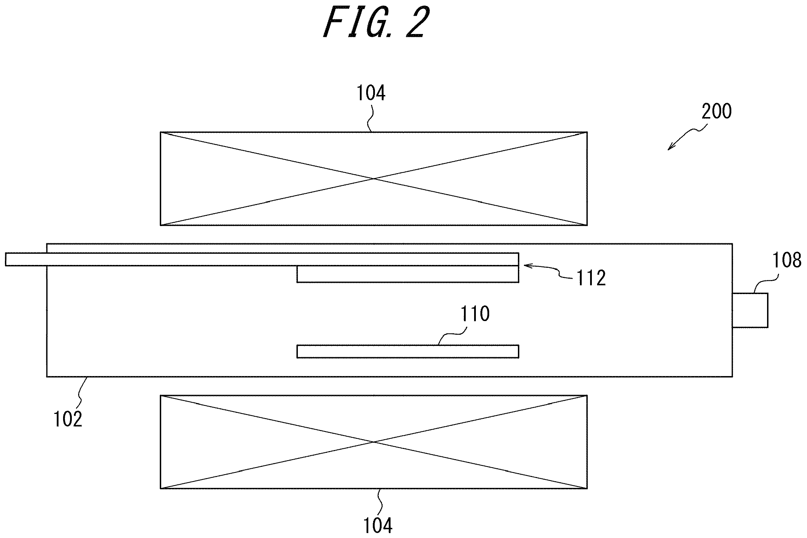

FIG. 2 schematically shows another production apparatus 200 used in the method for producing a carbon nanostructure aggregate. This apparatus 200 has the same configuration as the apparatus shown in FIG. 1 except that a shower head 112 for spraying the reducing gas, the source gas, the catalyst activating materials, and the like is used.
The shower head 112 is disposed such that the axis of spraying of each spray hole is oriented substantially perpendicular to the catalyst film forming surface of the substrate. That is, the direction of a gas stream sprayed from the spray holes provided in the shower head is substantially perpendicular to the substrate.
The use of the shower head 112 to spray the reducing gas enables the reducing gas to be uniformly spread over the substrate and thus enables the catalyst to be efficiently reduced. As a result, the uniformity of a carbon nanostructure aggregate grown on the substrate can be increased, and also the consumption of the reducing gas can be reduced as well. The use of such a shower head to spray the source gas enables the source gas to be uniformly spread over the substrate and thus enables the source gas to be efficiently consumed. As a result, the uniformity of a carbon nanostructure aggregate grown on the substrate can be increased, and also the consumption of the source gas can be reduced as well. The use of such a shower head to spray the catalyst activating materials enables the catalyst activating materials to be uniformly spread over the substrate, thus the activity of the catalyst is increased, and its service life is extended. Accordingly, the carbon nanostructures can be continuously grown for a long period of time.

[One example of continuous production apparatus]

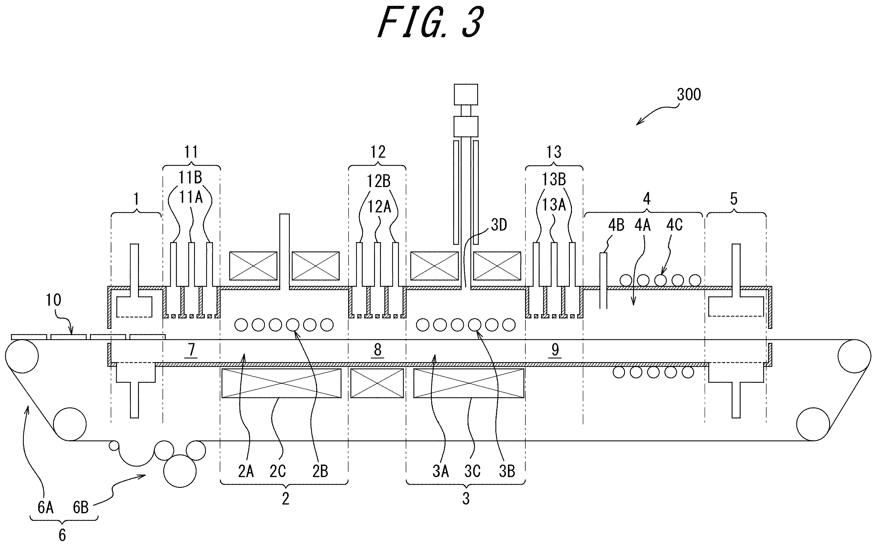

FIG. 3 schematically shows yet another production apparatus 300 used in the method for producing a carbon nanostructure aggregate. As shown in FIG. 3, the production apparatus 300 has an inlet purge section 1, a formation unit 2, a growth unit 3, a cooling unit 4, an outlet purge section 5, a conveying unit 6, connecting sections 7, 8, 9, and a gas mixing preventing means 11, 12, 13.

[Inlet purge section 1]

The inlet purge section 1 is a set of devices for preventing outside air from entering a furnace through an inlet for the catalyst substrate 10. It has a function to purge the surrounding environment of the catalyst substrate 10 conveyed to the inside of the production apparatus 300 with an inert purge gas such as nitrogen. Specifically, it has a chamber for retaining the purge gas, a spraying section for spraying the purge gas, and the like.

[Formation unit 2]

The formation unit 2 is a set of devices for achieving the formation step. Specifically, it has a formation furnace 2A for retaining the reducing gas, a reducing gas spraying section 2B for spraying the reducing gas, a heater 2C for heating at least one of the catalyst and the reducing gas, and the like.

[Growth unit 3]

The growth unit 3 is a set of devices for achieving the growth step. Specifically, it includes a growth furnace 3A, a source gas spraying section 3B for spraying the source gas onto the catalyst substrate 10, and a heater 3C for heating at least one of the catalyst and the source gas. A discharge port 3D is provided in the upper part of the growth unit 3.

[Cooling unit 4]

The cooling unit 4 is a set of devices for achieving the cooling step of cooling the catalyst substrate 10 on which a carbon nanostructure aggregate has been grown. Specifically, it has a cooling furnace 4A for retaining the cooling gas and, in the case of a water-cooled type, a water-cooled cooling pipe 4C disposed so as to surround the space inside the cooling furnace or, in the case of an air-cooled type, a cooling gas spraying section 4B for spraying a cooling gas inside the cooling furnace.

[Outlet purge section 5]

The outlet purge section 5 is a set of devices for preventing outside air from entering the furnace through the outlet for the catalyst substrate 10. It has a function to configure the surrounding environment of the catalyst substrate 10 to be an inert purge gas environment such as nitrogen. Specifically, it has a chamber for retaining the purge gas, a spraying section for spraying the purge gas, and the like.

[Conveying unit 6]

The conveying unit 6 is a set of devices for conveying the catalyst substrate 10 into the furnaces of the production apparatus. Specifically, it has a mesh belt 6A as in a belt conveyor system, a belt-drive section 6B where an electric motor equipped with reduction gears is used, and the like.

[Connecting sections 7, 8, 9]

The connecting sections 7, 8, 9 are a set of devices spatially connecting the space inside the furnace of each unit. Specifically, examples include a furnace or a chamber that is capable of blocking the surrounding environment of the catalyst substrate 10 from outside air and allowing the catalyst substrate 10 to be passed from a unit to a unit.

[Gas mixing preventing means 11, 12, 13]

The gas mixing preventing means 11, 12, 13 are a set of devices for preventing gases from mutually entering the adjacent furnaces (the formation furnace 2A, the growth furnace 3A, the cooling furnace 4A) inside the production apparatus 100, and are provided in the connecting sections 7, 8, 9. The gas mixing preventing means 11, 12, 13 have seal gas spraying sections 11B, 12B, 13B for spraying a seal gas such as nitrogen along the apertures of the inlets and the outlets of the furnaces for the catalyst substrate 10, and discharge sections 11A, 12A, 13A for mainly discharging the sprayed seal gas to the outside, respectively.

The catalyst substrate 10 placed on the mesh belt 6A is conveyed through the apparatus inlet into the furnace of the inlet purge section 1, subsequently, treated in each furnace, and then conveyed to the outside of the apparatus through the apparatus outlet from the outlet purge section 5.

(Carbon nanostructure aggregate)

According to the production method of the disclosure, a carbon nanostructure aggregate can be produced that has a large external specific surface area, specifically an external specific surface area exceeding 900 $m^2/g$. Accordingly, excellent material and energy storage characteristics, separation characteristics, electrode characteristics, catalyst supporting characteristics, and the like are exerted. A carbon nanostructure aggregate produced under suitable production conditions has an external specific surface area exceeding 1000 $m^2/g$.

<Carbon nanostructure>

Carbon nanostructures constituting the carbon nanostructure aggregate according to the disclosure is a nano-sized material composed of carbon atoms, and a specific material is not particularly limited. Examples are a carbon nanocoil in a coiled form, a CNT in a tubular form, a graphene nanoribbon in which a CNT is partially open, a CNT twisted in the extending direction, a zigzag CNT extending in a zigzag manner in the extending direction, a bead-supporting CNT in which beads are formed on a CNT, a carbon nanobrush having a large number of CNT bristles, a fullerene in a spherical shell form, graphene, a diamond-like carbon thin film, a coil twist, and the like. Carbon nanostructure aggregates of these can be grown on the catalyst surface according to a CVD method by appropriately setting the production conditions with reference to known documents. Examples of the known documents include JP2009-127059A (diamond-like carbon), JP2013-86993A (graphene), JP2001-192204A (coil twist), and JP2003-277029A (fullerene).

In the disclosure, among the above carbon nanostructures, graphene is preferably contained. Graphene has an external specific surface area of about 2630 $m^2/g$, which is far greater than the theoretical value of a single-walled CNT. However, when a large number of graphene sheets are gathered, graphene aggregates, and the external specific surface area of a graphene aggregate does not exceed 1000 $m^2/g$. However, when graphene is contained as a part of the carbon nanostructures constituting the carbon nanostructure aggregate of the disclosure, graphene contributes to an increase of the external specific surface area of the aggregate as a whole and is thus preferable.

In the disclosure, graphene nanoribbons are preferably contained as carbon nanostructures. As shown in the Examples described below, it was found that in the carbon nanostructure aggregate of the disclosure, some CNTs as carbon nanostructures are at least partially open and are thus in a ribbon form. In the disclosure, such CNTs that are at least partially open and are in a ribbon form are referred to as "graphene nanoribbons". CNTs that are at least partially open and are in a ribbon form contribute to an increase of the external specific surface area of the carbon nanostructure aggregate as a whole and are thus preferable.

Moreover, in the disclosure, CNTs are preferably contained as carbon nanostructures. As described above, the theoretical value of the external specific surface area of a CNT is 1315 $m^2/g$, and, for example, in the single-walled CNT described in NPL 1, an external specific surface area of 1300 $m^2/g$, which is close to the theoretical value, is achieved. As described above, a method of mass-producing high-quality CNTs is being established by a super growth method, so CNTs contained as primary carbon nanostructures in a carbon nanostructure aggregate enable the external specific surface area of the aggregate as a whole to be increased, and are thus preferable.

<Properties of carbon nanostructure aggregate>

The carbon nanostructure aggregate according to the disclosure has properties described in detail below when the aggregate is evaluated as a whole.

[External specific surface area]

Herein, the "external specific surface area" is determined from a "t-plot" obtained by converting a relative pressure into the average thickness t (nm) of a nitrogen gas adsorption layer in an adsorption isotherm of the carbon nanostructure aggregate measured by a nitrogen gas adsorption method (the t-plot method by de Boer et al.).

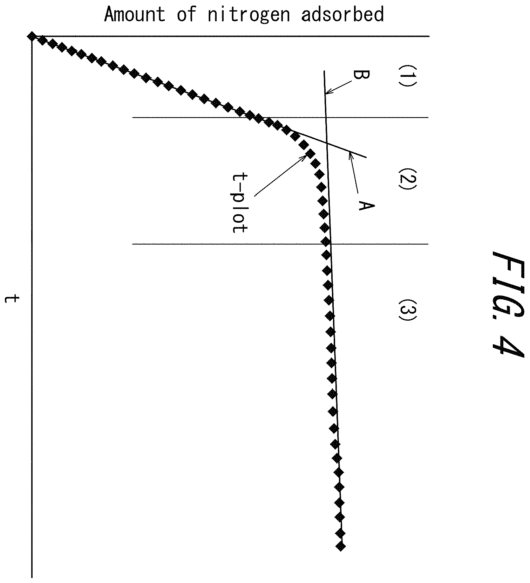

FIG. 4 shows a graph indicating one example of a t-plot of the carbon nanostructure aggregate. In the t-plot shown in FIG. 4, the gradient of the approximate line in process (3) represents an external specific surface area S3. Thus, in order to determine the external specific surface area of the carbon nanostructure aggregate, a t-plot is prepared, and the gradient of the approximate line in the process (3) is determined. The gradient of the approximate line in process (1) represents a total specific surface area S1 of the carbon nanostructure aggregate, and an internal specific surface area S2 can be calculated by subtracting the external specific surface area S3 from the total specific surface area S1.

In the disclosure, in terms of storage characteristics for materials, energy, and the like, catalyst supporting capability, and the like, the external specific surface area is preferably 1000 $m^2/g$ or more, more preferably 1315 $m^2/g$ or more, further preferably 1400 $m^2/g$ or more, particularly preferably 1500 $m^2/g$ or more, and most preferably 1600 $m^2/g$ or more.

The total specific surface area is preferably 1250 $m^2/g$ or more, more preferably 1330 $m^2/g$ or more, and particularly preferably 1430 $m^2/g$ or more. Moreover, the internal specific surface area is preferably 30 $m^2/g$ or more.

[Carbon concentration]

As for the carbon concentration of the carbon nanostructure aggregate, the purity thereof is usually 98 mass% or more, preferably 99 mass% or more, and more preferably 99.9 mass% or more even without purification treatment. When no purification treatment is carried out, the carbon purity immediately after synthesis is the purity of the carbon nanostructure aggregate. Purification treatment may be carried out as desired. Here, when the carbon nanostructures are CNTs, impurities are barely contained, and various characteristics intrinsic to CNTs can be sufficiently exerted. Purity can be determined by elemental analysis using fluorescent X-rays.

[G/D ratio]

In the carbon nanostructure aggregate according to the disclosure, the ratio (G/D ratio) of the G band peak intensity to the D band peak intensity in a Raman spectrum is preferably 2 or more, and more preferably 4 or more. The G/D ratio is an index commonly used to evaluate the quality of a CNT. In the Raman spectrum of the carbon nanostructure aggregate measured by a Raman spectrometer, vibrational modes referred to as a G band (in the vicinity of 1600 $cm^{-1}$) and a D band (in the vicinity of 1350 $cm^{-1}$) are observed. The G band is a vibrational mode derived from the hexagonal lattice structure of graphite, which is the cylindrical surface of a CNT, and the D band is a vibrational mode derived from a non-crystalline part. Thus, a CNT having a higher peak intensity ratio (G/D ratio) of the G band to the D band can be evaluated as being highly crystalline. The upper limit of the G/D ratio can be 50 or less. Those having a G/D ratio exceeding 50 have high linearity and form a large bundle, and the specific surface area is decreased. More preferably, the G/D ratio is 10 or less.

[Yield]

The yield of the carbon nanostructure aggregate according to the production method of the disclosure is preferably 1.0 $mg/cm^2$ or more, and more preferably 2.0 $mg/cm^2$ or more. In the disclosure, the yield is calculated by the following formula:

$$(\text{Yield}) = (\text{Difference between substrate weights before and after carbon nanostructure aggregate production}) / (\text{Catalyst supporting area of substrate})$$

The properties of the carbon nanostructure aggregate described above can be controlled by adjusting the state of the catalyst layer of the catalyst substrate used in the preparation of the carbon nanostructure aggregate (e.g., how fine the catalyst particles are) and synthesis conditions of the carbon nanostructure aggregate (e.g., the composition of the mixed gas).

When the carbon nanostructures constituting the carbon nanostructure aggregate according to the disclosure are CNTs, CNTs are directly formed by the production method of the disclosure such that a large number of CNTs are arranged (oriented) in a direction substantially perpendicular to the substrate. In the disclosure, this is referred to as a "CNT-oriented aggregate". By peeling the aggregate off the catalyst substrate by, for example, a physical, chemical, or mechanical peeling method, specifically by a method involving peeling the aggregate using an electric field, a magnetic field, centrifugal force, or surface tension, a method involving directly scraping away the aggregate in a mechanical manner using tweezers or a cutter blade, or a method involving peeling the aggregate by pressure such as suction with a vacuum pump or by heat, CNTs in a bulk state or CNTs in a powdery state can be obtained.

CNTs may be single-walled carbon nanotubes or may be multi-walled carbon nanotubes, and according to the production method of the disclosure, single-walled carbon nanotubes can be more suitably produced. Not being limited to CNTs linearly extending in the extending direction, the CNTs may be CNTs twisted in the extending direction, zigzag CNTs extending in a zigzag manner in the extending direction, and bead-supporting CNTs in which beads are formed on CNTs. Twisted CNTs and zigzag CNTs contribute to an increase of the external specific surface area and are thus preferable.

The average diameter (Av) of CNTs is preferably 0.5 nm or more and more preferably 1 nm or more, and is preferably 15 nm or less and more preferably 10 nm or less. The average diameter (Av) of carbon nanotubes is usually determined by measuring 100 carbon nanotubes using a transmission electron microscope.

As for the CNT-oriented aggregate, the weight density is preferably 0.002 $g/cm^3$ or more and 0.2 $g/cm^3$ or less. When the weight density is 0.2 $g/cm^3$ or less, bonding between CNTs constituting the CNT-oriented aggregate is weak, and therefore the CNTs can be easily dispersed in a homogeneous manner when the CNT-oriented aggregate is stirred in a solvent or the like. When the weight density is 0.002 $g/cm^3$ or more, the CNT-oriented aggregate has an improved integrity, can be suppressed from disintegration, and therefore is easily handled.

The CNT-oriented aggregate preferably has a high orientation. Whether the CNT-oriented aggregate has a high orientation or not can be assessed by at least any one of 1. to 3. below.

1. When X-rays are emitted in a first direction parallel to the longitudinal direction of a CNT and a second direction perpendicular to the first direction to measure X-ray diffraction intensity (the $\theta$-$2\theta$ method), there are a $\theta$ angle and a reflection direction at which the reflection intensity from the second direction is greater than the reflection intensity from the first direction, and there are a $\theta$ angle and a reflection direction at which the reflection intensity from the first direction is greater than the reflection intensity from the second direction.

2. When X-ray diffraction intensity is measured by a two-dimensional diffraction pattern image obtained by emitting X-rays in a direction perpendicular to the longitudinal direction of a CNT (the Laue method), a diffraction peak pattern that indicates the presence of anisotropy appears.

3. The Hermann's orientation factor is greater than 0 and smaller than 1 and more preferably 0.25 or more and 1 or less when the X-ray diffraction intensity obtained by the $\theta$-$2\theta$ method or the Laue method is used.

The height (length) of the CNT-oriented aggregate is preferably in the range of 10 $\mu$m or more and 10 cm or less. When the height is 10 $\mu$m or more, the orientation is improved. When the height is 10 cm or less, production can be carried out in a short period of time, thus attachment of carbon-based impurities can be suppressed, and the specific surface area can be improved.

EXAMPLES

The disclosure will now be specifically described below by way of Examples, but the disclosure is not limited to these Examples.

<Preparation of catalyst substrate>

[Substrate]

A flat plate of Fe-Cr alloy SUS 430 (manufactured by JFE Steel Corporation, Cr: 18 mass%) having a length of 500 mm, a width of 500 mm, and a thickness of 0.6 mm was provided. When the surface roughness of multiple portions was measured using a laser microscope, the arithmetic average roughness Ra was $\approx$ 0.063 $\mu$m.

[Formation of catalyst]

A catalyst was formed on the above substrate by the following method. First, 1.9 g of aluminum tri-sec-butoxide was dissolved in 100 mL (78 g) of 2-propanol, 0.9 g of triisopropanolamine as a stabilizer was added and dissolved, and thereby a coating agent for alumina film formation was prepared. Then, the above-described coating agent for alumina film formation was applied by dip coating on the substrate in an environment having a room temperature of 25°C and a relative humidity of 50%. As for the application conditions, the substrate was immersed, then retained for 20 seconds, drawn up at a drawing rate of 10 mm/sec, and then dried by air for 5 minutes. Next, the substrate was heated in an air environment at 300°C for 30 minutes and then cooled to room temperature. Thereby, an alumina film having a film thickness of 40 nm was formed on the substrate.

Subsequently, 174 mg of iron acetate was dissolved in 100 mL of 2-propanol, 190 mg of triisopropanolamine as a stabilizer was added and dissolved, and thereby an iron film coating agent was prepared. Then, the iron film coating agent was applied by dip coating on the above-described substrate furnished with an alumina film in an environment having a room temperature of 25°C and a relative humidity of 50%. As for the application conditions, the substrate was immersed, then retained for 20 seconds, drawn up at a drawing rate of 3 mm/sec, and then dried by air for 5 minutes. Next, the substrate was heated in an air environment at 100°C for 30 minutes and then cooled to room temperature. Thereby, a catalyst forming film having a thickness of 3 nm was formed.

<Production of carbon nanostructure aggregate>

(Comparative Examples 1-1 and 1-2)

A formation step and a growth step were sequentially carried out in a batch-type synthesis furnace shown in FIG. 1 to produce a CNT-oriented aggregate. CNTs were produced on the substrate surface by successively carrying out the formation step and the growth step using a catalyst substrate obtained by cutting the above-described catalyst substrate to have a size of 40 mm in length × 40 mm in width. Table 1 shows the gas flow rate, gas composition, heater temperature, and treatment time in each step.

[Table 1]

| Step | | Gas flow rate [sccm] | Composition of source gas [vol%] | | | | | Temperature (°C) | Treatment time [min] |
|---|---|---|---|---|---|---|---|---|---|
| | | | $C_2H_2$ | CO | $CO_2$ | $H_2$ | $N_2$ | | |
| Formation | Comparative Example 1-1 | 3000 | - | - | - | 100 | - | 750 | 23 |
| | Comparative Example 1-2 | | | | | | | | |
| Growth | Comparative Example 1-1 | 2000 | 1.0 | - | 2.0 | 1.0 | Balance | 760 | 10 |
| | Comparative Example 1-2 | | | 2.0 | - | | | | |

The heating time of the source gas was adjusted by changing the position where the catalyst substrate was provided to determine a substrate position that resulted in the best balance between the yield and the specific surface area of the CNTs produced. To verify the concentrations of carbon monoxide and carbon dioxide contained in the gas brought into contact with the catalyst in the position where the substrate was to be provided, the growth step was carried out without providing the catalyst substrate, and a gas analysis was carried out by suction-sampling about 200 sccm of gas in the vicinity of the position where the substrate was to be provided. Table 2 shows the results of gas analysis under respective conditions and the results of evaluating the characteristics of the CNTs produced.

[Table 2]

| Step | | Composition of contact gas [vol%] | | | | | | | | [CO]/[C] | [CO]/[CO₂] | Yield [mg/cm²] | G/D | Specific surface area [m²/g] | | |
|---|---|---|---|---|---|---|---|---|---|---|---|---|---|---|---|---|
| | | CO | CO₂ | Hydrocarbon A | | | Hydrocarbon B | Hydrocarbon C | Hydrocarbon D | | | | | External | Internal | Total = External + Internal |
| | | | | $C_2H_2$ | $pC_3H_4$ | VA | 13BD | CPD | $aC_3H_4$ | | | | | | | |
| Growth | Comparative Example 1-1 | 0.0060 | 2.0913 | 0.8191 | 0.0014 | 0.0305 | 0.0011 | 0.0010 | 0.0003 | 0.003 | 0.003 | 2.2 | 4.5 | 881 | 321 | 1202 |
| | Comparative Example 1-2 | 2.3698 | 0.0000 | 0.8186 | 0.0015 | 0.0311 | 0.0010 | 0.0011 | 0.0003 | 1.33 | ∞ | 0.5 | 0.8 | 586 | 68 | 654 |

16

The "heating time of source gas" is an approximate average time from when the source gas enters the heating area in the furnace until it reaches the catalyst substrate, and can be determined by the following equation:

$$\text{Source gas heating time [min]} = (\text{Heating area volume [mL] upstream of substrate}) / \{(\text{Gas flow rate [sccm]}) \times (\text{Furnace temperature [K]}) \times 1 / (273 \text{ [K]})\}$$

In Table 2, $C_2H_2$ means acetylene, $pC_3H_4$ means methylacetylene [propyne], VA means vinylacetylene,13BD means 1,3-butadiene, CPD means cyclopentadiene, and $aC_3H_4$ means propadiene (allene). The same applies to the tables below. Other than the components in Table 2, acetylenes such as diacetylene and phenylacetylene were detected each in a trace amount (10 ppm or less).

As is clear from Table 2, it was not possible to produce CNTs having an external specific surface area exceeding 900 $m^2$/g in any of the cases where carbon dioxide was used solely as a catalyst activating material (Comparative Example 1-1) and where carbon monoxide was used solely as a catalyst activating material (Comparative Example 1-2).

(Examples 1-1 to 1-5)

CNT-oriented aggregates were produced by using the same catalyst and production apparatus as in Comparative Examples 1-1 and 1-2 and changing the source gas composition in the growth step as shown in Table 3. Conditions not described in the following tables are the same as those in Comparative Examples 1-1 and 1-2.

[Table 3]

| Step | | Gas flow rate [sccm] | Composition of source gas [vol%] | | | | | Temperature (°C) | Treatment time [min] |
|---|---|---|---|---|---|---|---|---|---|
| | | | $C_2H_2$ | CO | $CO_2$ | $H_2$ | $N_2$ | | |
| Growth | Example 1-1 | 2000 | 1.0 | 0.1 | 2.0 | 1.0 | Balance | 760 | 10 |
| | Example 1-2 | | | 0.5 | | | | | |
| | Example 1-3 | | | 1.5 | | | | | |
| | Example 1-4 | | | 5.0 | | | | | |
| | Example 1-5 | | | 8.0 | | | | | |

The heating time of the source gas was adjusted by changing the position where the catalyst substrate was provided to determine a substrate position that resulted in the best balance between the yield and the specific surface area of the CNTs produced. To verify the concentrations of carbon monoxide and carbon dioxide contained in the gas brought into contact with the catalyst in the position where the substrate was to be provided, the growth step was carried out without providing the catalyst substrate, and a gas analysis was carried out by suction-sampling about 200 sccm of gas in the vicinity of the position where the substrate was to be provided. Table 4 shows the results of gas analysis under respective conditions and the results of evaluating the characteristics of the CNTs produced.

[Table 4]

| Step | | Composition of contact gas [vol%] | | | | | | | | [CO]/[C] | [CO]/[CO₂] | Yield [mg/cm²] | G/D | Specific surface area [m²/g] | | |
|---|---|---|---|---|---|---|---|---|---|---|---|---|---|---|---|---|
| | | CO | CO₂ | Hydrocarbon A | | | Hydrocarbon B | Hydrocarbon C | Hydrocarbon D | | | | | External | Internal | Total = External + Internal |
| | | | | C₂H₂ | pC₃H₄ | VA | 13BD | CPD | aC₃H₄ | | | | | | | |
| Growth | Example 1-1 | 0.1057 | 2.0869 | 0.8123 | 0.0016 | 0.0323 | 0.0011 | 0.0013 | 0.0003 | 0.06 | 0.05 | 2.6 | 5.5 | 1143 | 313 | 1456 |
| | Example 1-2 | 0.5893 | 2.1052 | 0.8252 | 0.0016 | 0.0326 | 0.0012 | 0.0012 | 0.0004 | 0.33 | 0.28 | 2.5 | 4.7 | 1229 | 153 | 1382 |
| | Example 1-3 | 1.8035 | 2.1042 | 0.8011 | 0.0016 | 0.0317 | 0.0012 | 0.0013 | 0.0003 | 1.03 | 0.86 | 2.6 | 4.1 | 1167 | 270 | 1437 |
| | Example 1-4 | 5.7921 | 2.0319 | 0.7919 | 0.0015 | 0.0300 | 0.0010 | 0.0012 | 0.0004 | 3.37 | 2.85 | 1.6 | 2.6 | 1047 | 240 | 1287 |
| | Example 1-5 | 8.7182 | 2.0855 | 0.7591 | 0.0017 | 0.0282 | 0.0011 | 0.0015 | 0.0004 | 5.29 | 4.18 | 1.5 | 2.3 | 1107 | 210 | 1317 |

18

It can be understood from Table 4 that the carbon nanostructure aggregates of all Examples satisfying $0.05 \leq [CO]/[C] \leq 5.5$ achieve an external specific surface area exceeding 1000 $m^2/g$ as aggregates as a whole. Also, it can be understood that the CNTs of Example 1-1 to Example 1-3 satisfying $0.05 \leq [CO]/[C] \leq 5.5$ achieve a high yield in addition to an external specific surface area exceeding 1000 $m^2/g$.

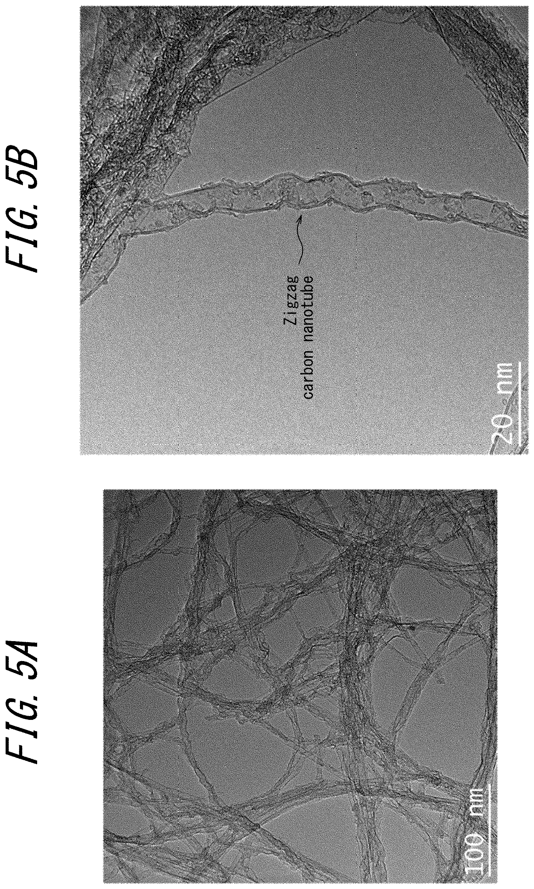

FIG. 5 shows images of the CNTs of Example 1-1 by a transmission electron microscope (TEM). It can be understood from FIG. 5 that the CNTs of Example 1-1 include CNTs having a zigzag structure.

(Examples 2-1 to 2-4)

CNT-oriented aggregates were produced by using the same catalyst and production apparatus as in Comparative Examples 1-1 and 1-2 and changing the source gas composition in the growth step as shown in Table 5. Conditions not described in the following tables are the same as those in Comparative Examples 1-1 and 1-2.

[Table 5]

| Step | | Gas flow rate [sccm] | Composition of source gas [vol%] | | | | | Temperature (°C) | Treatment time [min] |
|---|---|---|---|---|---|---|---|---|---|
| | | | $C_2H_2$ | CO | $CO_2$ | $H_2$ | $N_2$ | | |
| Growth | Example 2-1 | 2000 | 1.0 | 2.0 | 0.5 | 1.0 | Balance | 760 | 10 |
| | Example 2-2 | | | | 1.0 | | | | |
| | Example 2-3 | | | | 4.0 | | | | |
| | Example 2-4 | | | | 8.0 | | | | |

EP 3 438 046 A1

[Table 6]

| Step | | Composition of contact gas [vol%] | | | | | | | | | [CO]/[C] | [CO]/[CO$_2$] | Yield [mg/cm$^2$] | G/D | Specific surface area [m$^2$/g] | | |
|---|---|---|---|---|---|---|---|---|---|---|---|---|---|---|---|---|---|
| | | CO | CO$_2$ | Hydrocarbon A | | | Hydrocarbon B | Hydrocarbon C | Hydrocarbon D | | | | | | External | Internal | Total = External + Internal |
| | | | | C$_2$H$_2$ | pC$_3$H$_4$ | VA | 13BD | CPD | aC$_3$H$_4$ | | | | | | | | |
| Growth | Example 2-1 | 2.3371 | 0.3533 | 0.8023 | 0.0014 | 0.0314 | 0.0010 | 0.0011 | 0.0003 | 1.34 | 6.61 | 2.3 | 3.5 | 1117 | 362 | 1479 |
| | Example 2-2 | 2.3718 | 0.9618 | 0.7800 | 0.0017 | 0.0294 | 0.0011 | 0.0014 | 0.0004 | 1.40 | 2.47 | 2.6 | 4.5 | 1001 | 426 | 1427 |
| | Example 2-3 | 2.3295 | 4.2499 | 0.7909 | 0.0015 | 0.0319 | 0.0011 | 0.0012 | 0.0003 | 1.35 | 0.55 | 2.5 | 4.6 | 1034 | 313 | 1347 |
| | Example 2-4 | 2.3374 | 8.7665 | 0.7809 | 0.0017 | 0.0301 | 0.0011 | 0.0014 | 0.0004 | 1.38 | 0.27 | 2.4 | 3.1 | 1098 | 316 | 1414 |

The heating time of the source gas was adjusted by changing the position where the catalyst substrate was provided to determine a substrate position that resulted in the best balance between the yield and the specific surface area of the CNT-oriented aggregates produced. To verify the concentrations of carbon monoxide and carbon dioxide contained in the gas brought into contact with the catalyst in the position where the substrate was to be provided, the growth step was carried out without providing the catalyst substrate, and a gas analysis was carried out by suction-sampling about 200 sccm of gas in the vicinity of the position where the substrate was to be provided. Table 6 shows the results of gas analysis under respective conditions and the results of evaluating the characteristics of the CNTs produced.

It can be understood from Table 6 that in the range of $0.25 \leq [CO]/[CO_2] \leq 6.7$, CNT-oriented aggregates having an external specific surface area exceeding 1000 $m^2$/g are obtained in a high yield.

(Examples 3-1 and 3-2)

A formation step and a growth step were sequentially carried out in a batch-type synthesis furnace shown in FIG. 1 to produce a carbon nanostructure aggregate. A carbon nanostructure aggregate was produced on the substrate surface by successively carrying out the formation step and the growth step using a catalyst substrate obtained by cutting the above-described catalyst substrate to have a size of 40 mm in length $\times$ 40 mm in width. Table 7 shows the gas flow rate, gas composition, heater temperature, and treatment time in each step.

[Table 7]

| Step | | Gas flow rate [sccm] | Composition of source gas | | | | | Temperature (°C) | Treatment time [min] |
|---|---|---|---|---|---|---|---|---|---|
| | | | $C_2H_2$ | CO | $CO_2$ | $H_2$ | $N_2$ | | |
| Formation | Example 3-1 | 3000 | - | - | - | 100 | - | 750 | 23 |
| | Example 3-2 | | | | | | | | |
| Growth | Example 3-1 | 2000 | 1.0 | 2.0 | 2.0 | 1.0 | Balance | 760 | 10 |
| | Example 3-2 | | | 4.0 | | | | | |

The heating time of the source gas was adjusted by changing the position where the catalyst substrate was provided to determine a substrate position that resulted in the best balance between the yield and the specific surface area of the carbon nanostructure aggregate produced. To verify the concentrations of carbon monoxide and carbon dioxide contained in the gas brought into contact with the catalyst in the position where the substrate was to be provided, the growth step was carried out without providing the catalyst substrate, and a gas analysis was carried out by suction-sampling about 200 sccm of gas in the vicinity of the position where the substrate was to be provided. Table 8 shows the results of gas analysis under respective conditions and the results of evaluating the characteristics of the carbon nanostructure aggregate produced.

EP 3 438 046 A1

[Table 8]

| Step | | Composition of contact gas | | | | | | | | [CO]/[C] | [CO]/[CO₂] | Yield [mg/cm²] | G/D | Specific surface area | | | Carbon purity [wt%] |
|---|---|---|---|---|---|---|---|---|---|---|---|---|---|---|---|---|---|
| | | CO | CO₂ | Hydrocarbon A | | | Hydrocarbon B | Hydrocarbon C | Hydrocarbon D | | | | | External | Internal | Total = External + Internal | |
| | | | | C₂H₂ | pC₃H₄ | VA | 13BD | CPD | aC₃H₄ | | | | | | | | |
| Growth | Example 3-1 | 2.3759 | 2.1126 | 0.8148 | 0.0015 | 0.0326 | 0.0011 | 0.0011 | 0.0003 | 1.34 | 1.12 | 2.4 | 3.8 | 1457 | 266 | 1723 | 99 |
| | Example 3-2 | 4.7023 | 2.0668 | 0.7993 | 0.0015 | 0.0300 | 0.0010 | 0.0012 | 0.0003 | 2.71 | 2.28 | 2.0 | 3.0 | 1675 | 452 | 2127 | 99 |

It can be understood from Table 8 that the carbon nanostructure aggregates of all Examples satisfying $1.0 \leq [CO]/[C] \leq 3.0$ and $1.0 \leq [CO]/[CO_2] \leq 2.3$ achieve an external specific surface area exceeding 1300 m$^2$/g as aggregates as a whole. The carbon nanostructure aggregates of Example 3-1 and Example 3-2 were produced so as to satisfy $1.3 \leq [CO]/[C] \leq 2.8$, $2.3\% \leq [CO] \leq 4.8\%$, and $1.1 \leq [CO]/[CO_2] \leq 2.3$, and it can be understood that the external specific surface areas of these carbon nanostructure aggregates achieve external specific surface areas greatly exceeding 1315 m$^2$/g, which is the theoretical value of a single-walled CNT.

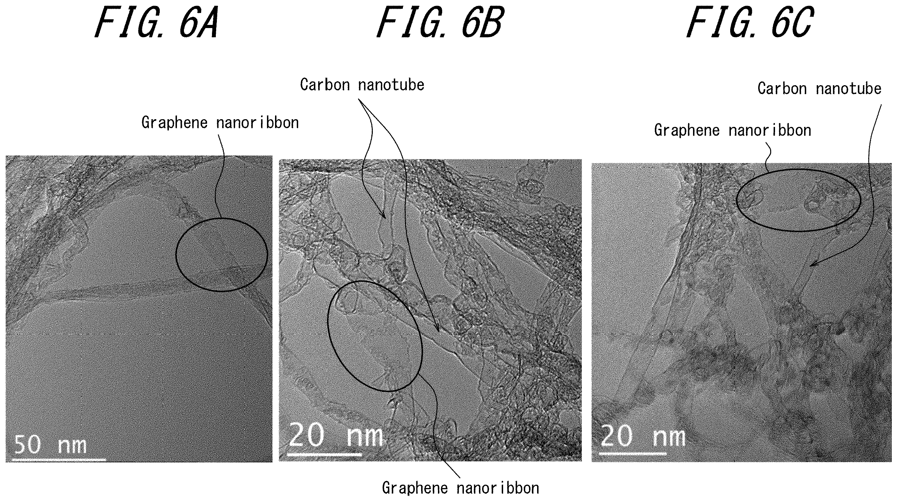

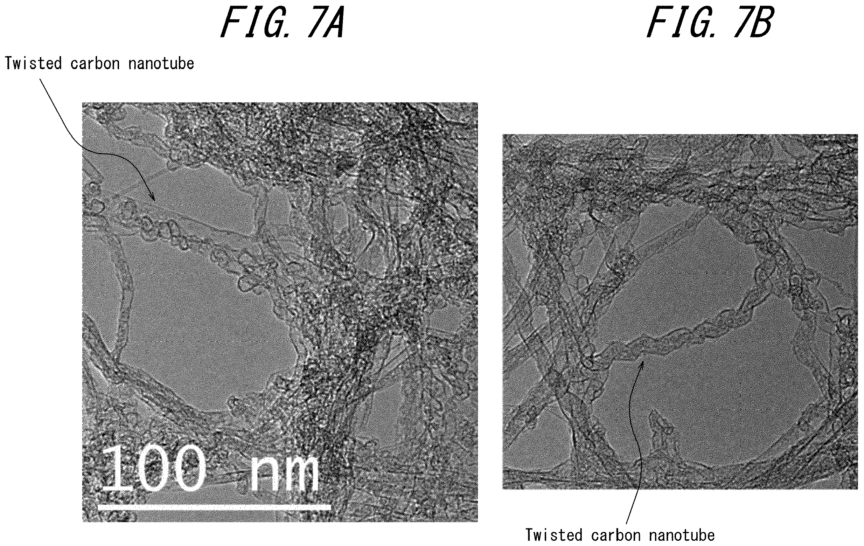

FIG. 6 and FIG. 7 show images of the carbon nanostructure aggregate of Example 3-1 by a transmission electron microscope (TEM). It can be understood from FIG. 6 that single-walled graphene nanoribbons and single-walled carbon nanotubes are concomitantly present as carbon nanostructures in the carbon nanostructure aggregate of Example 3-1. Also, it can be understood from FIG. 7 that single-walled graphene nanoribbons or single-walled carbon nanotubes having a twisted structure are concomitantly present as carbon nanostructures in the carbon nanostructure aggregate of Example 3-1.

(Example 4-1)

A carbon nanostructure aggregate was produced by using the same catalyst and production apparatus as in Examples 3-1 and 3-2 and changing the source gas composition in the growth step as shown in Table 9. Conditions not described in the following tables are the same as those in Examples 3-1 and 3-2.

[Table 9]

| Step | | Gas flow rate [sccm] | Composition of source gas | | | | | Temperature (°C) | Treatment time [min] |
|---|---|---|---|---|---|---|---|---|---|
| | | | $C_2H_2$ | CO | $CO_2$ | $H_2$ | $N_2$ | | |
| Growth | Example 4-1 | 2000 | 1.0 | 2.0 | 2.0 | 0.0 | Balance | 760 | 10 |

[Table 10]

| Step | | Composition of contact gas | | | | | | | | [CO]/[C] | [CO]/[CO$_2$] | Yield [mg/cm$^2$] | G/D | Specific surface area | | | Carbon purity [wt%] |
|---|---|---|---|---|---|---|---|---|---|---|---|---|---|---|---|---|---|
| | | CO | CO$_2$ | Hydrocarbon A | | | Hydrocarbon B | Hydrocarbon C | Hydrocarbon D | | | | | External | Internal | Total = External + Internal | |
| | | | | C$_2$H$_2$ | pC$_3$H$_4$ | VA | 13BD | CPD | aC$_3$H$_4$ | | | | | | | | |
| Growth | Example 4-1 | 2.3322 | 2.0348 | 0.8277 | 0.0042 | 0.0334 | 0.0002 | 0.0011 | 0.0009 | 1.29 | 1.15 | 2.7 | 3.9 | 1335 | 289 | 1624 | 99 |

The heating time of the source gas was adjusted by changing the position where the catalyst substrate was provided to determine a substrate position that resulted in the best balance between the yield and the specific surface area of the carbon nanostructure aggregate produced. To verify the concentrations of carbon monoxide and carbon dioxide contained in the gas brought into contact with the catalyst in the position where the substrate was to be provided, the growth step was carried out without providing the catalyst substrate, and a gas analysis was carried out by suction-sampling about 200 sccm of gas in the vicinity of the position where the substrate was to be provided. Table 10 shows the results of gas analysis under respective conditions and the results of evaluating the characteristics of the carbon nanostructure aggregate produced.

It can be understood from Table 10 that when hydrogen is not used as a reducing gas as well, a carbon nanostructure aggregate having an external specific surface area exceeding 1300 $m^2/g$ is obtained as long as $1.0 \leq [CO]/[C] \leq 3.0$ and $1.0 \leq [CO]/[CO_2] \leq 2.3$ are satisfied. The carbon nanostructure aggregate of Example 4-1 was produced so as to satisfy $1.3 \leq [CO]/[C] \leq 2.8$, $2.3\% \leq [CO] \leq 4.8\%$, and $1.1 \leq [CO]/[CO_2] \leq 2.3$, and it can be understood that the external specific surface areas thereof achieve external specific surface areas greatly exceeding 1315 $m^2/g$, which is the theoretical value of a single-walled CNT. Also, it can be understood from a comparison between Example 4-1 and Example 3-1 and Example 3-2 that Example 4-1 can achieve a higher yield.

INDUSTRIAL APPLICABILITY

According to the disclosure, a carbon nanostructure aggregate having a large external specific surface area can be provided.

REFERENCE SIGNS LIST

100, 200, 300 Apparatus for producing carbon nanostructure aggregate
102 Reaction furnace
104 Heater
106 Gas supply port
108 Discharge port
110 Holder
112 Shower head
1 Inlet purge section
2 Formation unit
2A Formation furnace
2B Reducing gas spraying section
2C Heater
3 Growth unit
3A Growth furnace
3B Source gas spraying section
3C Heater
3D Discharge port
4 Cooling unit
4A Cooling furnace
4B Cooling gas spraying section
4C Water-cooled cooling pipe
5 Outlet purge section
6 Conveying unit
6A Mesh belt
6B Belt-drive section
7, 8, 9 Connecting section
10 Catalyst substrate
11, 12, 13 Gas mixing preventing means
11A, 12A, 13A Discharge section
11B, 12B, 13B Seal gas spraying section

**Claims**

1. A method for producing a carbon nanostructure aggregate, comprising supplying a source gas to a catalyst to produce a carbon nanostructure aggregate comprising a plurality of carbon nanostructures by a chemical vapor deposition method, wherein
a gas derived from the source gas and brought into contact with the catalyst comprises:

as a hydrocarbon to serve as a carbon source, at least one of:

a hydrocarbon A having at least one acetylene skeleton,
a hydrocarbon B having at least one 1,3-butadiene skeleton,
a hydrocarbon C having at least one cyclopentadiene skeleton, and
a hydrocarbon D having at least one allene skeleton, and

carbon monoxide and carbon dioxide; and

satisfies

$$0.01 \leq [CO]/[C] \leq 15$$

where [C] is a total volume concentration of carbon contained in the hydrocarbons A, B, C, and D, and [CO] is a volume concentration of carbon monoxide.

2. The method for producing a carbon nanostructure aggregate according to claim 1, wherein the volume concentration of carbon monoxide is 0.001% or more and less than 15%.

3. The method for producing a carbon nanostructure aggregate according to claim 1 or 2, wherein the source gas comprises at least one of acetylene, ethylene, 1,3-butadiene, and cyclopentene.

4. The method for producing a carbon nanostructure aggregate according to any one of claims 1 to 3, wherein the gas derived from the source gas and brought into contact with the catalyst satisfies

$$0.01 \leq [CO]/[CO_2] \leq 30$$

where $[CO_2]$ is a volume concentration of carbon dioxide.

5. The method for producing a carbon nanostructure aggregate according to any one of claims 1 to 4, wherein the carbon nanostructures are carbon nanotubes.

6. The method for producing a carbon nanostructure aggregate according to any one of claims 1 to 3, wherein the gas derived from the source gas and brought into contact with the catalyst satisfies $1.0 \leq [CO]/[C] \leq 3.0$ and $1.0 \leq [CO]/[CO_2] \leq 2.3$ where $[CO_2]$ is a volume concentration of carbon dioxide.

7. A carbon nanostructure aggregate comprising a plurality of carbon nanostructures, wherein
an external specific surface area exceeds 1300 $m^2$/g.

8. The carbon nanostructure aggregate according to claim 7, comprising graphene as the carbon nanostructures.

9. The carbon nanostructure aggregate according to claim 7 or 8, comprising graphene nanoribbons as the carbon nanostructures.

10. The carbon nanostructure aggregate according to any one of claims 7 to 9, comprising carbon nanotubes as the carbon nanostructures.

11. The carbon nanostructure aggregate according to any one of claims 7 to 10, wherein a carbon purity by X-ray fluorometry is 98% or more.

12. The carbon nanostructure aggregate according to any one of claims 7 to 11, wherein a ratio of a G band peak intensity to a D band peak intensity (G/D ratio) in a Raman spectrum is 2 or more.

## FIG. 1

FIG. 2

EP 3 438 046 A1

# FIG. 3

# FIG. 4

FIG. 5B

Zigzag carbon nanotube

20 nm

FIG. 5A

100 nm

FIG. 6A

FIG. 6B

FIG. 6C

## FIG. 7A

Twisted carbon nanotube

100 nm

## FIG. 7B

Twisted carbon nanotube

EP 3 438 046 A1

**INTERNATIONAL SEARCH REPORT**

International application No.

PCT/JP2017/012704

A.   CLASSIFICATION OF SUBJECT MATTER
*C01B32/16*(2017.01)i, *B01J23/745*(2006.01)i, *C01B32/186*(2017.01)i

According to International Patent Classification (IPC) or to both national classification and IPC

B.   FIELDS SEARCHED

Minimum documentation searched (classification system followed by classification symbols)
C01B32/16, B01J23/745, C01B32/186

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
JSTPlus(JDreamIII), JST7580(JDreamIII), JSTChina(JDreamIII)

C.   DOCUMENTS CONSIDERED TO BE RELEVANT

| Category* | Citation of document, with indication, where appropriate, of the relevant passages | Relevant to claim No. |
|---|---|---|
| X<br>A | WO 2016/013218 A1  (Nippon Zeon Co., Ltd.),<br>28 January 2016 (28.01.2016),<br>paragraph [0055]; example 7<br>(Family: none) | 7,10-12<br>1-6,8-9 |
| X<br>A | WO 2015/045427 A1  (Nippon Zeon Co., Ltd.),<br>02 April 2015 (02.04.2015),<br>claims 1, 5 to 6, 8, 10 to 11, 13 to 14;<br>paragraphs [0084] to [0085], [0097] to [0098]<br>& US 2016/0221828 A1<br>claims 1, 5 to 6, 8, 10 to 11, 13 to 14;<br>paragraphs [0151] to [0152], [0164] to [0165]<br>& EP 3053876 A1 | 7-12<br>1-6 |

☒   Further documents are listed in the continuation of Box C.        ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 June 2017 (08.06.17) | 20 June 2017 (20.06.17) |

| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |
|---|---|

Form PCT/ISA/210 (second sheet) (January 2015)

**INTERNATIONAL SEARCH REPORT**

International application No.

PCT/JP2017/012704

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2015-067528 A  (Nippon Zeon Co., Ltd.),<br>13 April 2015 (13.04.2015),<br>entire text<br>(Family: none) | 1-12 |
| A | JP 2015-067529 A  (Nippon Zeon Co., Ltd.),<br>13 April 2015 (13.04.2015),<br>entire text<br>(Family: none) | 1-12 |
| A | JP 2015-093807 A  (National Institute of<br>Advanced Industrial Science and Technology),<br>18 May 2015 (18.05.2015),<br>entire text<br>(Family: none) | 1-12 |
| A | JP 5622101 B2  (Nippon Zeon Co., Ltd.),<br>12 November 2014 (12.11.2014),<br>entire text<br>& JP 2012-126599 A | 1-12 |
| A | WO 2014/097624 A1  (Nippon Zeon Co., Ltd.),<br>26 June 2014 (26.06.2014),<br>entire text<br>& US 2015/0321917 A1<br>entire text<br>& EP 2937312 A1 | 1-12 |
| A | WO 2015/064772 A1  (Nippon Zeon Co., Ltd.),<br>07 May 2015 (07.05.2015),<br>entire text<br>& US 2016/0251225 A1<br>entire text<br>& EP 3064472 A1 | 1-12 |
| A | WO 2010/147192 A1  (National Institute of<br>Advanced Industrial Science and Technology),<br>23 December 2010 (23.12.2010),<br>entire text<br>& JP 5549983 B2 | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011207758 A
- WO 2006011655 A
- JP 5622101 B
- WO 2012057229 A
- JP 2009127059 A
- JP 2013086993 A
- JP 2001192204 A
- JP 2003277029 A